# EUROPEAN PATENT APPLICATION

(11) **EP 4 714 263 A1**
(43) Date of publication of application: **25.03.2026**
(21) Application number: 24835003.5
(22) Date of filing: 02.07.2024
(51) Int. Cl.: A01K 31/00, G01G 17/08, G01G 19/413

(54) **AUTONOMOUS STANDARDIZATION DIVIDERS AND SCALES INSTALLED IN BREEDER HEN REARING BARNS**

(30) Priority: 05.07.2023 BR 102023013472
(71) Applicant: Peso Exato Ltda, Dois Vizinhos PR 85660-000 (BR)
(72) Inventor: HARTWIG, Leonidia Leitzke, Cep: 85660- 000 Estado: PR Dois Vizinhos (BR)
(74) Representative: Lorente Berges, Ana
(86) International application number: PCT/BR2024/050285
(87) International publication number: WO 2025/007202

(57) **Abstract**

The request for privilege of invention is directed to the poultry sector and deals with divisions and scales implanted in breeding farms of matrices with the objective of uniting the birds provided with similar weights within a single division without exceeding the maximum number of birds stipulated in that space. The aviary (1) is divided into three parts or divisions (2), (3) and (4) using barriers (5) and (5'), the first division (2) being aimed at lighter birds, the second (3) at medium weight birds and the third division (4) suitable for heavy birds. Next to the barriers (5) and (5'), the scales (6) are inserted in the form of cages that act as passages between the divisions of the aviary. The system created specifically to control the scales regulates the inflow and outflow within a total maximum number at each division, i.e., where a maximum number of birds per division was determined, no scale will remain with the trapdoor open in the inflow to that division, only in the outflow direction, until the maximum number of birds is normalized.

## Description

### Field of invention

The present request for privilege of invention is directed to the poultry sector and deals with divisions and scales implanted in breeding farms of matrices with the objective of uniting the birds provided with similar weights within a single division without exceeding the maximum number of birds stipulated in that space.

### Background of the invention and prior art

In breeder farms producing fertile eggs or broilers, from just a few days after hatching through to the end of their productive life, strict control of body weight is required. This is necessary to obtain the best production result. Each line (specific genetic strain) has its own weight-for-age curve, and one of the ways to keep birds within the target range is to adjust feed allocation whenever their body weight falls below or rises above the desired level. Light birds receive supplemental feed, while heavy birds have their feed restricted.

Today, birds are weighed and sorted manually so that a reasonably accurate result can be achieved. At specific ages, all birds in a barn are individually weighed, then manually separated into different weight ranges in an effort to achieve uniform body weight within each group. Another alternative is to perform the task mechanically, using equipment designed to weigh and sort the birds. However, in both cases, human intervention is still required to carry out the process successfully.

These procedures, whether manual or mechanical, occur from five days to twenty-two weeks of the bird's life, when it is transferred to fertile egg production farms, a process performed both for females and males.

The weighing technique, in addition to being an exhaustive task for farmers, demands the whole week from a team of up to twelve people, if manually, and a team of up to six people if mechanically, with a monthly frequency, and can also cause stress in the birds as well as cause injuries to them (arthritis, wing breakage, etc.) due to manual or mechanical weighing, generating significant production losses.

Referring to the state of the art aimed at patent registrations, documents BR 10 2016 026293-3, BR 20 2015 025473-9 and BR 20 2012 019421-5 can be cited, which claim a poultry selector conveyor, provisions applied in poultry classifier and the configuration applied in poultry separator equipment, successively.

The first record number BR 10 2016 026293-3 claims two conveyors, the first being a supply conveyor where the birds are inserted and transported through a funnel to individually end up on the second conveyor covered by a dome where the birds are weighed and selected, having at the front door a supply opening and four outputs actuated by pneumatic cylinders to which it has its specific weighing and a fifth output of the birds that did not fit into any of the parameters defined by the user. The equipment consists of four load cells that weigh and send the data to an external system, which in turn sends a response opening the window for expulsion of the bird according to its weight.

The next record number BR 20 2015 025473-9 requires a weighing compartment (2A) with tilting weighing tray (3) supported on a load cell (4) programmed to select from one to six or one to ten bird weight categories, depending on the equipment. The model is composed of a lateral distribution compartment (2D), by tilting or not the front, side, rear or bottom walls, which, together with the tilting weighing tray (3), are actuated by pneumatic cylinders or by electric drive.

The third record number BR 20 2012 019421-5 presents a poultry separator equipment characterized by a support structure (2) with double horizontal crash doors (3), side trapdoors (4), an internal weighing scale or platform (6), and lower actuators (7). In this weighing and separation process, the birds are inserted on the horizontal doors (3) manually, and the bird is later directed to its box.

Although they are functional, the aforementioned records do not meet the proposal of the present invention, as the main idea is to standardize the birds according to their weight range through internal divisions applied in the aviary followed by the implementation of autonomous scales, with no supply and weighing conveyors, as presented in record BR 10 2016 026293-3, and lateral distribution compartment (2D) with tilting front, side, rear or bottom walls, according to the description of record BR 20 2015 025473-9. In addition, the poultry selection process does not require human intervention, as in the prior art number BR 20 2012 019421-5, completely distinguishing itself from all prior art in its process and equipment configuration.

### Description of the drawings

The present inventive step will be described hereinafter in greater detail, by way of non-limiting example, with reference to its preferred embodiment illustrated in the drawings below, in which:
Figure 1 illustrates in isometric view a conventional aviary.
Figure 2 shows in an isometric view the aviary, with the absence of the roof, receiving the divisions and the autonomous standardization scales.
Figure 3 depicts in isometric view the autonomous standardization scale and its main components.
Figure 4 illustrates in isometric view the preferred configuration of the second available scale pattern and its main components.
Figure 5 demonstrates in side view the attachment of the scale using pivoting hinges.
Figure 6 shows in side view the insertion of the scale in the aviary division.
Figure 7 depicts in top view the direction of the scale to a given division.
Figure 8 shows in top view the movement of the scale to the next division.
Figure 9 represents in the flowchart the recording of the weights of the birds on the server with a database.

### Detailed description of the invention

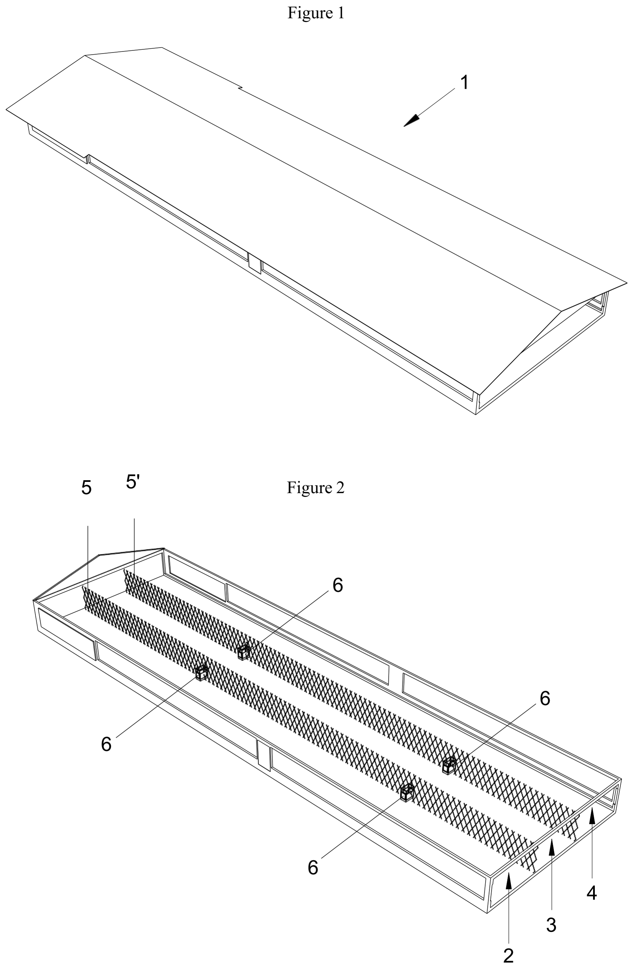

According to Figures 1 and 2, the aviary (1) is first divided into three parts or divisions (2), (3) and (4) using barriers (5) and (5'), whether divisions or separators in screens, tarpaulins, PVC, among other types, the first division (2) being aimed at lighter birds, the second (3) at medium weight birds and the third division (4) suitable for heavy birds. Next to the barriers (5) and (5'), the scales (6) are inserted in the form of cages that act as passages between the divisions of the aviary.

The number of divisions and the arrangement, whether longitudinal or transverse, may vary according to the project, as well as devices to attract birds to enter the cages, which may be, but is not limited to, a multi-colored luminous device.

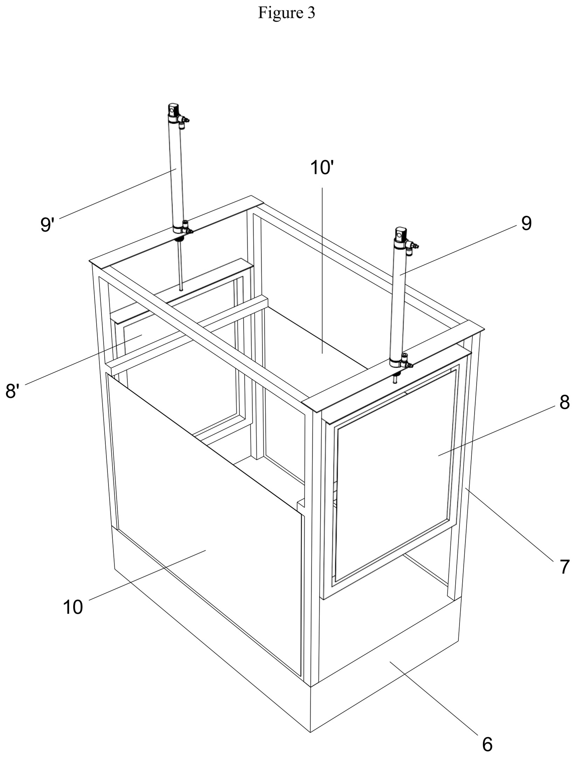

The scale itself (6) (Figure 3) is formed by a structure (7) that supports two hatches (8) and (8') symmetrically positioned on their transverse sides, both hatches being moved vertically, upward and downward, by pneumatic, hydraulic or electric motor actuators (9) and (9') (not shown). On the longitudinal sides of the scale there are barriers (10) and (10') able to prevent birds from escaping, and these barriers may be metal sheets, polymer or any compatible material.

The invention consists of keeping the weight of the birds uniform within each division. Every time a bird is outside the range defined in its specific division, that bird will be transferred to the next division, i.e., a maximum weight of 500g will be allowed, for example, for light birds in the division (2), from 501 to 700g in the division (3) and birds above 701g in the division (4). The scales positioned between the divisions (2) and (3) remain with their trapdoors facing the division (2) open and on the side of the division (3) closed. The scales between the divisions (3) and (4) meet with the hatches open in the division (3) and the hatches closed on the side of the division (4). Every time a bird climbs on one of the scales, it will be automatically weighed in order to identify its weight and obtain information about its current weight range. If the weight is in the range of the division from where the bird left, there will be no change in the movement of the hatches, however, if a weight is detected above the range stipulated in the division (2), the open hatch automatically closes and the hatch that gives access to the division (3), where the medium weight birds are, opens, thus transferring the bird to this new division. At the same time, a bird of the division (2) will be discounted and a bird in the division (3) will be incremented, the scale remaining in this condition (trapdoor of the division (2) closed and trapdoor of the division (3) open) until the next bird of the division (3) weighing within the range or lower rises on the scale and the
reverse process occurs.

In a third event, where a bird is in the division (2) and weighs 750g, it will be transferred to the division (3) and subsequently transferred to the division (4), after its climb on one of the scales positioned between the division (2) and division (3).

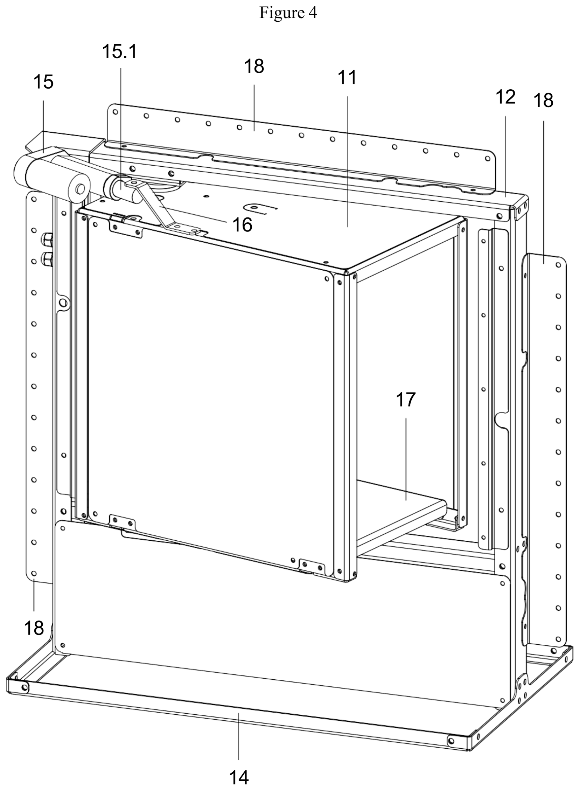

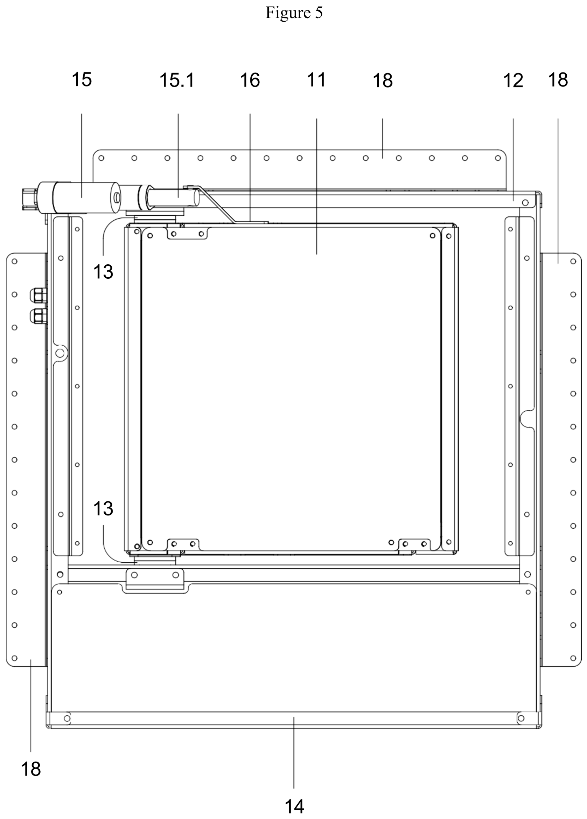

According to Figures 4 and 5, the second scale pattern adopted is formed by a chamber (11) open on one of its transverse sides, the chamber being fixed on the opposite transverse side, by means of pivoting hinges (13), in a frame (12) positioned longitudinally and supported on a rectangular base (14) arranged in the perpendicular position. The angular movement of the chamber (11) is made by an electric, hydraulic or pneumatic actuator (15), its rod (15.1) remaining attached to the upper part of the chamber (11) through a support (16).

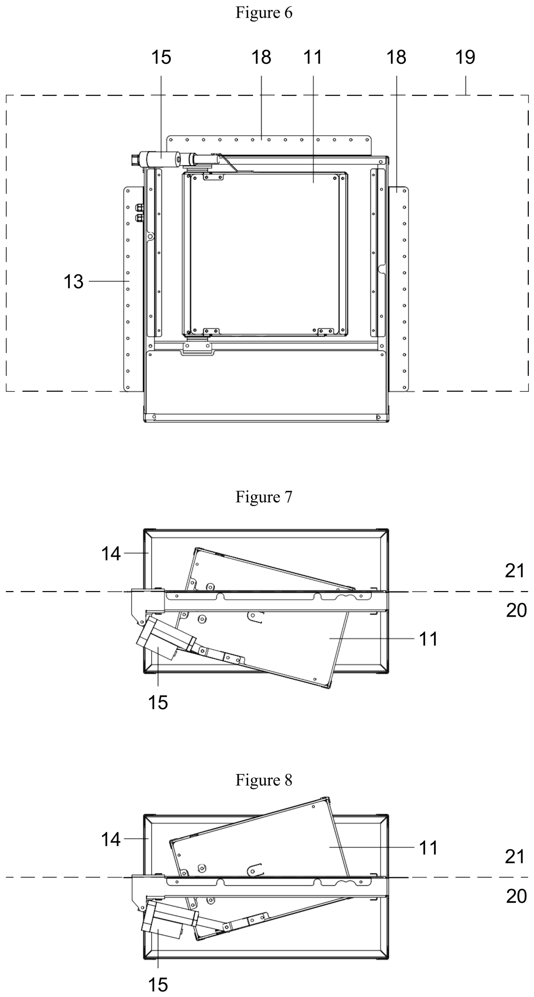

The chamber (11) contains an internal scale (17) responsible for weighing the birds, and the frame (12) holds the plates (18) used to attach the divisions or separators made of mesh, tarpaulins, or PVC (19) (Figure 6), since they are installed exactly at the longitudinal points of the divisions.

As can be seen in Figures 7 and 8, the chamber (11) remains directed to a certain division (20). When the bird enters the chamber, its weight is identified and, if this bird exceeds the specified weight limit, the chamber automatically rotates about 30°, directing the bird to the subsequent division (21). The process also happens in reverse, i.e., if there is weight loss, the chamber transfers the bird to the division with lighter birds. If the bird does not undergo a change in weight, the chamber remains static, keeping it in the same room.

This second scale pattern reduces the number of actuators in the equipment, increasing the useful life, and decreasing the costs of production and acquisition of the scale; the weighing chamber becomes the very barrier for the bird and the risk of hurting or stressing the birds is lower, as there is no movement of trapdoors, as in previous scales.

This exchange between the divisions takes place throughout the period in which the birds remain in the aviary, thus always maintaining the weights in each division within its ideal range, as previously determined.

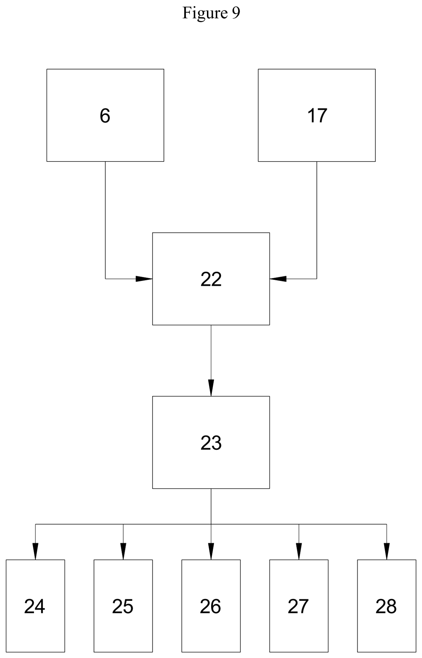

In accordance with the flowchart of Figure 9, all birds passing through the scales (6) and (17) have their weights recorded on the server (22) of the aviary, which feeds a database (23) capable of providing the farmer with the number of birds weighed on the day (24), average weight (25) and uniformity of birds (26) in each division, as well as the weights (27) from birds that were not transferred from division, in addition to controlling the maximum number of birds/division (28).

The records are transferred in real time, via Wi-Fi to the server or, if for some reason the scales are not connected to the server, the information of the collected weights is stored until the connection is established, and the records are later downloaded by the server.

The information collected is useful for managing the weight of all birds, providing equal, greater or lesser amount of feed, as determined by each lineage supplier.

In a second possibility, if there is an automatic feed weighing and distribution system, the information can be provided directly to the system which, by predetermined parameters, becomes autonomous in the decision to correct the amount of feed, doing this daily, weekly or at the frequency determined by the operator.

In order not to overcrowd one of the divisions, to the point that there is not enough physical space for all the birds, the system created specifically to control the standardization scales regulates the inflow and outflow within a total maximum number at each division. In a hypothetical example, where a maximum number of 2,050 birds per room was determined, when this number is reached, no scale will remain with the trapdoor open in the inlet flow to that room, only in the outlet direction, until the maximum number of birds is normalized.

The main advantage of the system implemented and working in aviaries is the elimination of manual handling of birds and the use of personnel (labor), avoiding all the harm generated by the conventional process, such as risk of accidents and fatigue of employees, stress of birds and losses in production.

It is worth pointing out that the inventive activity in question must be understood as representative and not limiting, apt to suffer convenient modifications in its form, as long as such modifications do not escape the essence of the proposal.

## Claims

1. AUTONOMOUS UNIFORMITY DIVISIONS AND SCALES INSTALLED IN
BREEDER GROW -OUT FARMS
**CHARACTERIZED in that** the aviary (1) is divided into three parts or divisions (2), (3) and (4) using barriers (5) and (5'), whether divisions or separators in screens, tarpaulins or PVC, the first division (2) being aimed at lighter birds, the second (3) at medium weight birds and the third division (4) suitable for heavy birds, with the barriers (5) and (5') having the scales (6) in the form of cages for the passage of birds between the divisions of the aviary.

2. **AUTONOMOUS UNIFORMITY DIVISIONS AND SCALES INSTALLED IN BREEDER GROW-OUT FARMS, according to claim 1, CHARACTERIZED in that** the scale (6) has a structure (7) that supports two hatches (8) and (8') symmetrically positioned on its transverse sides, both hatches being moved vertically, upward and downward, by pneumatic, hydraulic or electric motor actuators (9) and (9'), existing on the longitudinal sides of the scale two barriers (10) and (10').

3. **AUTONOMOUS UNIFORMITY DIVISIONS AND SCALES INSTALLED IN BREEDER GROW-OUT FARMS, according to claims 1 and 2, CHARACTERIZED in that** the second scale pattern is formed by a chamber (11) open on one of its transverse sides, the chamber being fixed on the opposite transverse side, by means of pivoting hinges (13), in a frame (12) positioned longitudinally and supported on a rectangular base (14) arranged in the perpendicular position, with angular movement of said chamber (11) by an electric, hydraulic or pneumatic actuator (15), its rod (15.1)
remaining attached to the upper part of the chamber (11) through a support (16).

4. **AUTONOMOUS UNIFORMITY DIVISIONS AND SCALES INSTALLED IN BREEDER GROW-OUT FARMS, according to claim 3, CHARACTERIZED in that** the chamber (11) has in its internal part a scale (17) and the frame (12) holds plates (18) used to couple the divisions or separators to screens, tarpaulins or PVC (19), said chamber (11) being able to automatically rotate about 30°.

5. **AUTONOMOUS UNIFORMITY DIVISIONS AND SCALES INSTALLED IN BREEDER GROW-OUT FARMS, according to claims 1, 2, 3 and 4, CHARACTERIZED in that** all birds passing through the scales (6) and (17) have their weights recorded on the server (22) of the aviary, which feeds a database (23) capable of providing the farmer with the number of birds weighed on the day (24), average weight (25) and uniformity of the birds (26) in each division, as well as the weights (27) from the birds that were not transferred from division, also controlling the maximum number of birds/division (28), together with a system specifically created to control the uniformity scales, which regulate the inflow and outflow within a total maximum number at each division.
